# EUROPÄISCHE PATENTSCHRIFT

(11) **EP 0 998 093 B1**
(45) Veröffentlichungstag und Bekanntmachung des Hinweises auf die Patenterteilung: **19.03.2003**
(21) Anmeldenummer: 99250365.6
(22) Anmeldetag: 15.10.1999
(51) Int. Cl.: H04L 29/06, H04L 12/64, H04L 12/28

(54) **Verfahren zur Übertragung von Rückkanal-Daten in einer Verbindung zwischen einem Endgerät und einem Server eines Paketvermittlungsnetzes**
Method to transmit reverse channel data on a connection between a terminal and a server in a packet switched network
Procédé de transmission de données d'un canal retour entre un terminal et un serveur dans un réseau de commmutation par paquets

(30) Priorität: 15.10.1998 DE 19849281; 23.12.1998 DE 19860756
(43) Veröffentlichungstag der Anmeldung: 03.05.2000
(60) Teilanmeldung: 02090414.0
(73) Patentinhaber: Teles AG Informationstechnologien, 10587 Berlin (DE)
(72) Erfinder: Schindler, Prof. Dr. Sigram, 14129 Berlin (DE); Wegener, Rochus, 13503 Berlin (DE); Illg, Andreas, 10555 Berlin (DE); Paetsch, Frank, 10961 Berlin (DE); Lüdtke, Karsten, 12167 Berlin (DE)
(74) Vertreter: Müller, Wolfram Hubertus, Dipl.-Phys.

(56) Entgegenhaltungen:
- WO-A-98/10541
- DE-A- 19 645 368
- PINAR F J R ET AL: "Multimedia systems based on satellite technology" COMPUTER NETWORKS AND ISDN SYSTEMS, NORTH HOLLAND PUBLISHING. AMSTERDAM, NL, Bd. 30, Nr. 16-18, 30. September 1998 (1998-09-30), Seiten 1543-1549, XP004138685 ISSN: 0169-7552

## Beschreibung

Die Erfindung betrifft ein Verfahren zur Übertragung von Rückkanal-Daten in einer Verbindung zwischen einem Endgerät und einem Server eines Paketvermittlungsnetzes, wahlweise schmalbandig über das Paketvermittlungsnetz und/oder POTS/ISDN-Leitungen und/oder breitbandig über einen Breitband-Rückkanal, sowie einen Switch zur Durchführung des Verfahrens.

### Hintergrund der Erfindung

Zunehmend werden Satelliten als kostengünstiges Kommunikationsmedium eingesetzt. Die DVB Data Broadcasting Organisation hat im Frühjahr 1998 eine Data Broadcasting Spezifikation definiert, die ein schnelles Herunterladen von Daten aus dem Internet an einen Nutzer über Satellit vorsieht. Dabei werden die aus dem Internet herunterzuladenden Daten über einen Satelliten-Uplink an einen Satelliten gesendet, über einen Transponder des Satelliten ausgestrahlt und über eine Satellitenschüssel des Nutzers von diesem empfangen. Eine Satellitenübertragung stellt dabei eine sehr hohe Bandbreite zur Verfügung, etwa 38 Mbit/s.

Ein weitere breitbandige Übertragung, die zunehmend an Bedeutung gewinnt, ist die Überbrückung der "letzten Meile" von der Ortsvermittlungsstelle zum Endteilnehmer mittels ADSL-Technik. Dabei werden die zu übertragenden Daten breitbandig auf einer herkömmlichen Kupferleitung übertragen. Der Datenstrom wird aufgeteilt und auf eine Vielzahl von Kanälen aufmoduliert. Es lassen sich Bandbreiten zum Endteilnehmer von bis zu 8 Mbit/s realisieren.

Weiter werden Realisierungen der Teilnehmer-Anschluß-Leitungen mittels Fernsehkabel-Technik, Stromkabel-Technik und Mobilfunkstrecken diskutiert. Unter Teilnehmer-Anschluß-Leitung (TAL) wird dabei jedwede Verbindung zwischen einem Teilnehmerzugangs-Netz und einem seiner Teilnehmer verstanden.

Aus der DE-A1-196 45 368 ist ein Verfahren zur Übertragung von digitalen Daten in einem terrestrischen Telekommunikationsnetz bekannt, bei dem bei Vorliegen eines entsprechenden Steuersignals während einer bestehenden Verbindung ein Wechsel zwischen einer paketvermittelten und einer leitungsvermittelten Datenübertragung erfolgt.

Es besteht ein Bedürfnis nach Verfahren, die die bestehenden breitbandigen Techniken flexibel und an die Bedürfnisse eines Nutzers angepaßt zur Verfügung stellen.

### Aufgabe der Erfindung

Dementsprechend liegt der vorliegenden Erfindung die Aufgabe zugrunde, ein Verfahren zur Übertragung von Rückkanal-Daten in einer Verbindung zwischen einem Endgerät und einem Server eines Paketvermittlungsnetzes sowie einen Switch zur Durchführung des Verfahrens zur Verfügung zu stellen, die ein hohes Maß an Flexibilität bei der Wahl der Übertragungsmethode in Abhängigkeit von den Vorgaben eines Nutzer oder eines Netzwerkmanagements ermöglichen. Insbesondere soll der Nutzer die Möglichkeit haben, die Dienstequalität, insbesondere die Bandbreite einer Datenübertragung nach seinen Wünschen dynamisch festzulegen.

### Zusammenfassung der Erfindung

Diese Aufgabe wird erfindungsgemäß durch ein Verfahren mit den Merkmalen des Anspruchs 1 und einen Switch mit den Merkmalen des Anspruchs 17 gelöst. Bevorzugte und vorteilhafte Ausgestaltungen der Erfindung sind in den Unteransprüchen angegeben.

Danach erfolgt eine Rückkanal-Datenübertragung zumindest auf einer Teilstrecke des Rückkanals wahlweise entweder schmalbandig über das Paketvermittlungsnetz und/oder POTS/ISDN-Leitungen oder zusätzlich breitbandig über einen Breitband-Rückkanal, wobei der Server und/oder eine Steuereinheit, die Teil des Paketvermittlungsnetzes ist oder zu diesem Zugang hat, wiederholt prüfen, ob ein durch den Nutzer des Endgerätes (1) oder ein Netzwerkmanagement ausgelöstes Steuersignal zum Zuschalten einer Rückkanal-Datenübertragung via Breitband-Rückkanal vorliegt, und für diesen Fall während der bestehenden Verbindung ein Breitband-Rückkanal zugeschaltet wird, wobei die Daten für den Breitband-Rückkanal vom Server über einen Breitband-Zugangsswitch geleitet werden. Die schmalbandige Verbindung wird dabei beibehalten und nicht aufgegeben, der Breitband-Rückkanal also zugeschaltet.

Die erfindungsgemäße Lösung zeichnet sich dadurch aus, daß während einer bestehenden Verbindung in Abhängigkeit von den Vorgaben eines Nutzers oder eines Netzwerkmanagements ein Dazuschalten eines Breitband-Rückkanals oder eines Teils davon erfolgen kann, und zwar ein Dazuschalten eines Breitband-Rückkanals zu einem schmalbandigen Rückkanal über ein paketvermitteltes Netz und/oder POTS/ ISDN-Leitungen. Dabei kann ein Nutzer entsprechend seinen Wünschen und Bedürfnissen . dynamisch zwischen schmalbandiger und zusätzlich breitbandiger Übertragung der Rückkanal-Daten hin- und herschalten.

Unter "Verbindung" zwischen einem Endgerät und einem Server oder zwischen einem Endgerät und einem Switch wird im Rahmen dieser Erfindung eine Ebene 7 Verbindung (L7-Verbindung) gemäß dem OSI-Referenzmodell verstanden. Ein "Umschalten" zwischen verschiedenen Übertragungstechniken (paketvermittelt, über eine Satellitenstrecke, über eine ADSL-Strekke) erfolgt in den Ebenen 3 oder 4 des OSI-Referenzmodells (L3-Verbindung) oder darunter und tangiert die Ebene 7 Verbindung nicht. Insbesondere stellen Netzwerkprotokolle wie das Internet Protokoll IP/UDP oder IP/TCP im wesentlichen eine Ebene 3/4 Verbindung zur Verfügung.

Mit anderen Worten ermöglicht die Erfindung es einem Nutzer, während einer vorliegenden L7-Verbindung den Rückkanal oder einen Teil davon (insbesondere die schmalbandige Last-Mile) dynamisch zwischen Breitband-Kommunikation (L3/4-Verbindung) und allein schmalbandiger Kommunikation etwa über ein paketvermitteltes Netz (ebenfalls L3/4-Verbindung) hin und her zu schalten und damit die ihm für die Datenübertragung zur Verfügung stehende Dienstequalität (insbesondere die Bandbreite) zu wechseln. Eine niedrige Dienstgüte geht dabei mit entsprechend geringeren Kosten einher.

Gleichzeitig ermöglicht die vorliegende Erfindung durch sinnvolle Nutzung der vorhandenem hohen Bandbreiten breitbandiger Kommunikationssysteme wie der Satellitenkommunikation, daß nicht eine Vielzahl von Nutzern durch ihre schmalbandigen Anforderungen die Leistungsfähigkeit des breitbandigen Kommunikationssystems überlasten. Ein Breitband-Rückkanal sollte nur bei einer hohen erforderlichen Bandbreite der Datenübertragung, etwa bei Herunterladen großer Datenmengen, nicht jedoch beim üblichen "Surfen" im Internet verwendet werden.

"POTS" steht für "Plain Old Telephony System", das herkömmliche Telefonnetz. "ISDN" steht für "Integrated Services Digital Network", das standardisierte diensteintegrierende digitale Telefonnetz.

Erfindungsgemäß wird der Breitband-Rückkanal durch eine Satelliten-Übertragungsstrecke realisiert. Dabei werden die Rückkanal-Daten vom Switch breitbandig zu einem Satelliten-Uplink bei Vorliegen des entsprechenden Steuersignals übertragen, vom Satelliten-Uplink zu einem Satellit gesandt, vom Satelliten ausgestrahlt, mittels einer Antenne empfangen und zum Endgerät übertragen.

Dies ermöglicht die sinnvolle Nutzung vorhandener hoher Bandbreite bei der Satellitenkommunikation, da durch die Möglichkeit, einen Breitband-Rückkanal nur bei bestimmten Anwendungen zu wählen, die Satellitenkommunikation nicht durch eine Vielzahl schmalbandiger Anwendungen, für die ein schmalbandiger Rückkanal völlig ausreicht, überlastet wird.

Um die für ihn bestimmten Rückkanal-Daten in dem breitbandigen, vom Satelliten gesandten Datenstrom, der die Daten zahlreicher weiterer Nutzer enthält, zu erkennen, wertet das Endgerät die Adreßfelder der über Satellit erhaltenen Datenpakete aus. Die Datenpakete bleiben auf der Satellitenstrecke in ihrer Struktur unverändert, so daß die Header der Datenpakete für eine Zuordnung zum jeweiligen Endgerät ausgewertet werden können.

In einer bevorzugten Ausgestaltung des erfindungsgemäßen Verfahrens ist die Steuereinheit gleich dem Breitband-Zugangsswitch (im folgenden als Switch bezeichnet) und wird eine Verbindung zwischen dem Endgerät und dem Server stets unter Zwischenschaltung des Switches hergestellt. Dementsprechend ist es ausreichend, daß allein der Switch prüft, ob ein durch den Nutzer des Endgerätes oder ein Netzwerkmanagement ausgelöstes Steuersignal zum Übergang auf eine Rückkanal-Datenübertragung via Breitband-Rückkanal vorliegt. Für diesen Fall werden die Rückkanal-Daten, die der Switch vom Server erhält, vom Sitch über den Breitband-Rückkanal zum Endgerät übertragen.

Diese Variante weist den Vorteil auf, daß eine Intelligenz zur Erkennung eines Steuersignals allein im Switch enthalten sein muß. Bei dem Switch handelt es sich bevorzugt um einen Internet Proxy-Server, mit dem das Endgerät kommuniziert. Ein Zuschalten eines Breitband-Rückkanals kann über geeignete Signalisierungsbefehle vom Endgerät an den Switch realisiert werden.

In einer alternativen Ausgestaltung ist die Steuereinheit ein dem Endgerät zugeordneter Proxy-Server, und prüft der Proxy-Server, ob ein durch den Nutzer des Endgerätes oder ein Netzwerkmanagement ausgelöstes Steuersignal zum Übergang auf eine Rückkanal-Datenübertragung via Breitband-Rückkanal vorliegt. Für diesen Fall baut der Proxy-Server über den Breitband-Zugangsswitch eine neue Verbindung zum Server auf und überträgt dem Breitband-Zugangsswitch Steuerbefehle dahingehend, die vom Server erhaltenen Rückkanal-Daten auf den Breitband-Rückkanal zu geben. Der Breitband-Zugangsswitch gibt die vom Server erhaltenen Rückkanal-Daten entsprechend den erhaltenen Steuerbefehlen dann auf den Breitband-Rückkanal.

In einer vorteilhaften Weiterbildung dieser Alternative teilt der Proxy-Server dem Server für den Fall, daß ein Teil der herunterzuladenden Daten vom Endgerät bereits über das Paketvermittlungsnetz empfangen wurde, die Stelle in der herunterzuladenden Datei mit, ab der die Datenübertragung erfolgen soll. Hierdurch wird verhindert, daß bereits heruntergelandene Daten nochmals unnötigerweise heruntergeladen werden.

In einer weiteren Alternative wird eine Verbindung direkt zwischen dem Endgerät und dem Server des Paketvermittlungsnetzes hergestellt, also nicht notwendigerweise unter Zwischenschaltung des Breitband-Zugangsswitchs. Dabei prüfen sowohl der Server als auch der Breitband-Zugangsswitch, ob ein vom Nutzer oder dem Netzwerkmanagement ausgelöstes Steuersignal zum Zuschalten einer Rückkanal-Datenübertragung via Breitband-Rückkanal vorliegt, und es werden für diesen Fall Rückkanal-Daten vom Server zum Switch übertragen und anschließend vom Switch auf den Breitband-Rückkanal zum Endgerät gegeben.

Diese Variante erfordert eine Intelligenz zur Erkennung entsprechender Steuersignale sowohl beim Breitband-Zugangsswitch als auch beim Server. Auch muß der Server ein Routing dahingehend vornehmen können, daß Rückkanal-Daten nun zunächst zum Switch übertragen werden, sofern dies nicht bereits geschieht. Das Steuersignal kann beispielsweise durch eine bestimmte Bit-Sequenz dargestellt sein, die sowohl der Switch als auch der Server über das Paketvermittlungsnetz erhalten.

In einer vorteilhaften Weiterbildung der Erfindung ist vorgesehen, daß der Nutzer die Bandbreite der über den Breitband-Rückkanal zum Endgerät erfolgenden Datenübertragung einstellen kann. Hierdurch können vom Nutzer bestimmte Geschwindigkeits- bzw. Dienstgüteklassen festgelegt werden, die naturgemäß unterschiedlichen Tarifen unterworfen sind. Die Festlegung der Bandbreite der Datenrückübertragung über den Breitband-Rückkanal erfolgt dabei zieladressenspezifisch.

Bevorzugt kann der Nutzer die Einstellung der Bandbreite der Datenübertragung über den Breitband-Rückkanal dynamisch während einer bestehenden Verbindung vornehmen. Hierdurch wird ein größtmögliches Maß an Individualität zur Verfügung gestellt und es einem Nutzer beispielsweise ermöglicht, einen Downloadvorgang, der länger als erwartet dauert, zu beschleunigen.

Mit Vorteil sind bestimmte maximale Bandbreiten der Datenrückübertragung auf dem Breitband-Rückkanal vorgesehen, zwischen denen der Nutzer während einer Verbindung dynamisch wechseln kann. Zur zieladressenspezifischen Einstellung der Bandbreite der Datenübertragung werden die für eine bestimmte Adresse bestimmten Datenpakete mit einer Geschwindigkeit auf den Breitband-Rückkanal gegeben, die der vom Nutzer ausgewählten Bandbreite entspricht. Die Steuerinformationen zur Auswahl der Bandbreite des Rückkanals werden vom Nutzer als Innenband- oder Außenbandsignale zunächst zum Breitband-Zugangsswitch übertragen und von diesem an eine Bandbreitenregulierungsvorrichtung weitergeleitet, die die Daten mit der gewünschten Bandbreite auf den Breitband-Rückanal gibt.

Ein erfindungsgemäßer Switch weist eine Steuereinrichtung auf, die in Abhängigkeit von Steuersignalen eines Nutzer oder eines Netzwerkmanagements ankommende Daten einer Verbindung entweder an eine schmalbandige TK-Infrastruktur wie ein Paketvermittlungsnetz oder eine schmalbandige Teilnehmer-Anschluß-Leitung oder an die schmalbandige TK-Infrastruktur und zusätzlich an einen als Satelliten-Übertragungsstrecke ausgebildeten Breitband-Rückkanal leitet.

Die Erfindung ermöglicht eine breitbandige Verbindung zwischen einem Telekommunikations-Teilnehmer und dem von ihm benutzen Teilnehmerzugangs-Netz. Erfindungsgemäß kann der Nutzer auf die breitbandige Verbindung wahlweise und dynamisch entsprechend seinen Wünschen und Bedürfnissen zurückgreifen.

### Beschreibung mehrerer Ausführungsbeispiele

Die Erfindung wird nachfolgend unter Bezugnahme auf die Figuren der Zeichnung an mehreren Ausführungsbeispielen näher erläutert werden. Es zeigen:
- Fig. 1: schematisch ein erfindungsgemäßes Telekommunikationsnetz,
- Fig. 2: ein Ablaufdiagramm eines ersten Verfahrens;
- Fig. 3: ein Ablaufdiagramm eines zweiten Verfahrens;
- Fig. 4: schematisch ein zweites Telekommunikationsnetz;
- Fig. 5: eine schematische Darstellung der Funktionseinheiten eines erfindungsgemäßen Switch,
- Fig. 6: eine Weiterbildung der Anordnung der Fig. 1, wobei zusätzlich eine Bandbreitenregulierungsvorrichtung vorgesehen ist und
- Fig. 7: eine Weiterbildung der Anordnung der Fig. 1, wobei, dem Endgerät ein Proxy-Server zugeordnet ist.

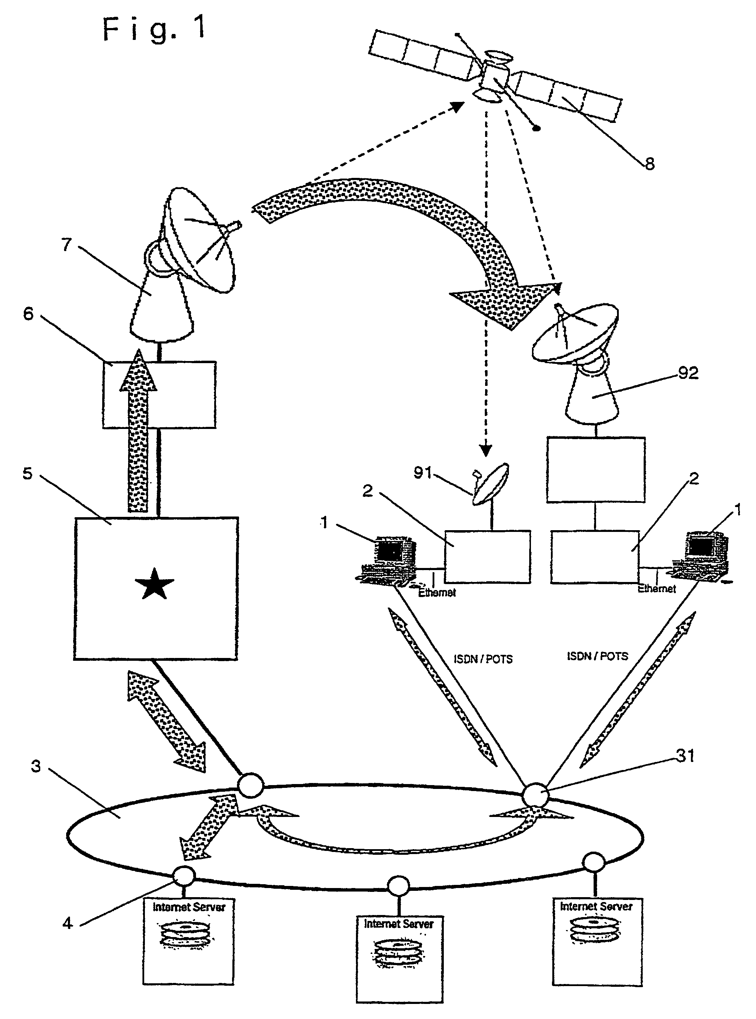

Fig. 1 zeigt ein Kommunikationssystem, bei dem ein Endgerät 1 über eine ISDN/POTS-Leitung schmalbandig an ein Paketvermittlungsnetz, insbesondere das normale Internet 3 angeschlossen ist. Weiter ist das Endgerä 1 über einen Ethernet-Anschluß mit einem Breitband-Empfangssystem 2 verbunden, das über eine Satellitenantenne 91, 92 von einem Satelliten ausgestrahlte Daten empfängt. Das Breitband-Empfangssystem 2 ist dabei optional und das Endgerät 1 kann alternativ auch direkt an die Satellitenantenne 91, 92 angeschlossen sein. Das Breitband-Empfangssystem 2 ist beispielsweise als PC-Karte oder als externe Box ausgebildet.

Bei der Satellitenantenne handelt es sich insbesondere um eine übliche Satellitenschüssel 91 oder die Empfangsstation 92 einer Satelliten-Gemeinschaftsantennenanlage. Auch kann vorgesehen sein, daß die vom Satelliten gesandten Daten von einer Kabelstation empfangen werden, in ein Breitbandnetz, etwa ein Fernseh-Kabelnetz eingespeist und über des Breitbandnetz an das Breitband-Empfangssystem 2 übertragen werden.

Im Internet 3 befinden sich zahlreiche Host-Computer oder Internet-Server 4, zwischen denen der Nutzer eines Endgerätes "surfen" kann. Wenn sich der Nutzer dazu entscheidet, bestimmte Daten von einem Internet-Server 4 herunterzuladen, so besitzt er hierzu zwei Möglichkeiten.

Erstens erfolgt ein Rückkanal zum Endgerät 1 in an sich bekannter Weise wiederum über das Internet 3 und ISDN/POTS-Leitungen. Zweitens werden die herunterzuladenden Daten breitbandig vom Internet-Server 4 an einen Breitband-Zugangsswitch 5 (im folgenden auch als Switch bezeichnet) und vom Switch 5 mit hoher Bandbreite über einen Satellit 8 zum Endgerät übertragen. Hierzu werden die Rückkanal-Daten vom Switch 5 zu einem Satelliten-Uplink 6 übertragen, vom Satelliten-Uplink 6 über eine Satellitenantenne 7 an einen Satelliten 8 gesandt, von diesem ausgestrahlt und über die dem Endgerät 1 zugeordnete Satellitenantenne 91, 92 breitbandig empfangen.

Bei dem Switch 5 handelt es sich insbesondere um einen Internet-Proxy-Server.

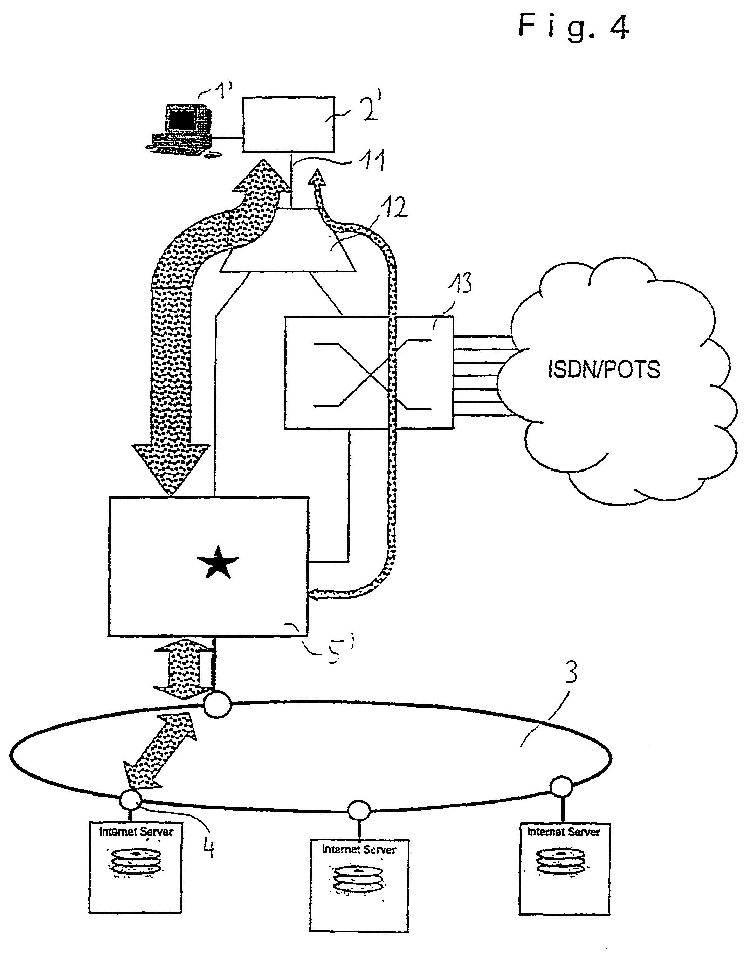

In Figur 1 ist eine Breitbandkommunikation durch dick gezeichnete Pfeile und eine Schmalbandkommunikation durch dünn gezeichnete Pfeile dargestellt. Gleiches gilt für Figur 4.

Die Entscheidung, ob der Rückkanal über Satellit 8 oder über das Internet 3 erfolgt, trifft der Nutzer des Endgerätes 1 oder ein Netzwerkmanagement durch Aussenden geeigneter Steuersignale über das Internet 3. Der Breitband-Zugangsswitch 5 besitzt dabei eine Steuereinrichtung, die in Abhängigkeit von den Steuersignalen des Endgerätes 1 herunterzuladende Daten entweder an das Internet 3 oder mit hoher Bandbreite an den Satelliten-Uplink 6 und damit zum Endgerät 1 überträgt.

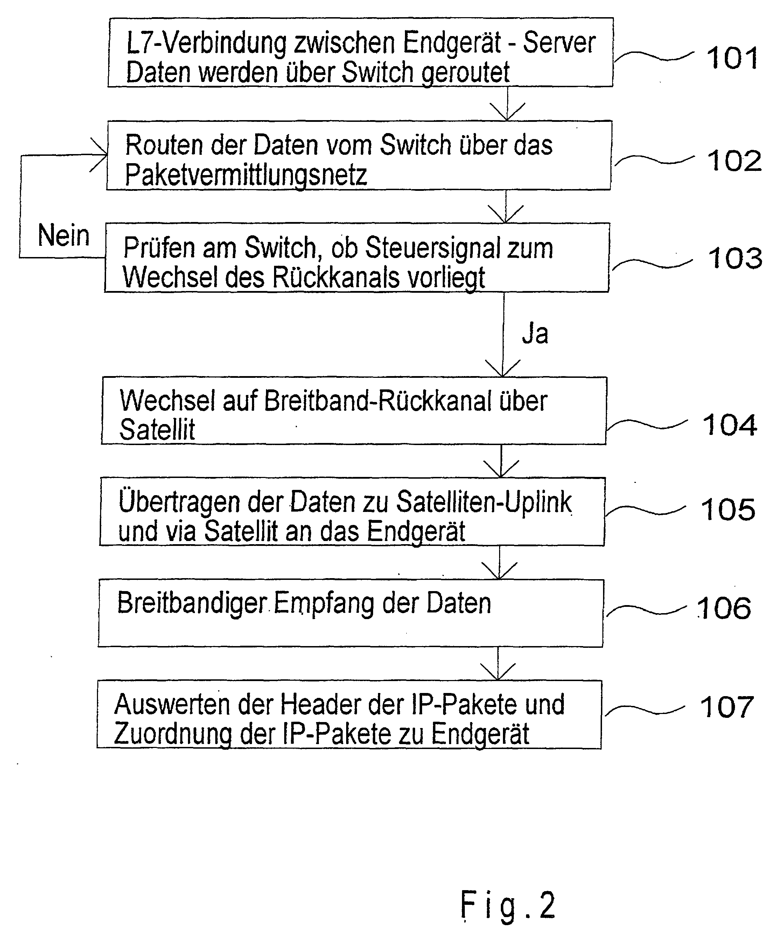

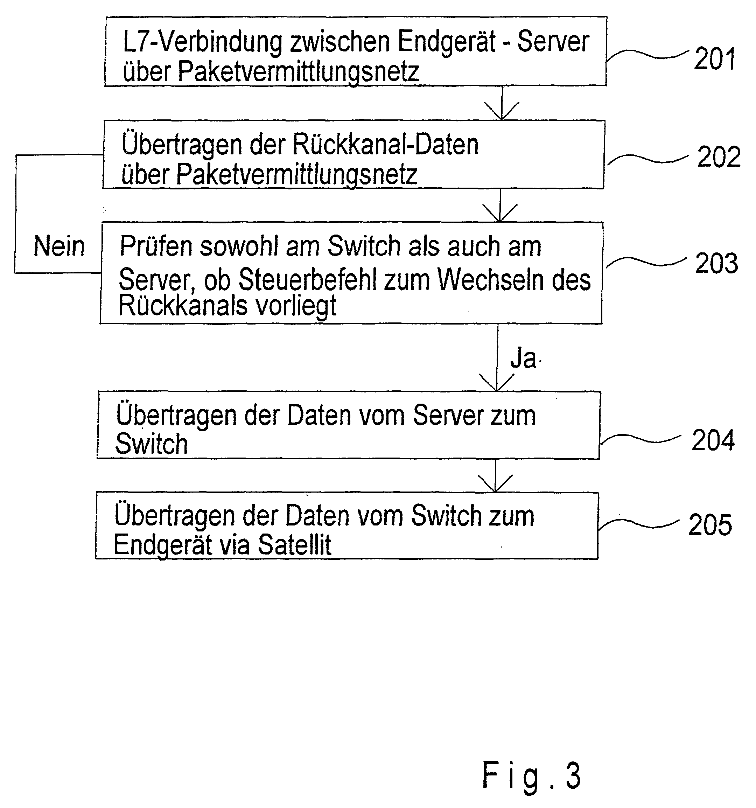

Es stehen drei leicht unterschiedliche Verfahren zur Verfügung, mit denen Rückkanal-Daten über Satellit 8 an das Endgerät 1 übertragen werden, wie im folgenden anhand der Figuren 2 und 3 erläutert wird.

Gemäß Fig. 2 baut das Endgerät 1 in einem ersten Verfahrensschritt 101 eine L7-Verbindung zwischen dem Endgerät 1 und dem Internet-Server 4 auf. Das Endgerät 1 wählt sich hierzu über einen Einwählknoten 31 in das Internet 3 ein. Die L7-Verbindung wird unter Zwischenschaltung des Breitband-Zugangsswitch 5 aufgebaut, der breitbandig mit dem Satelliten-Uplink 6 verbunden ist. Daten vom Endgerät 1 zum Server 4 und vom Server 4 zum Endgerät 1 werden also stets unter Zwischenschaltung des Switches 5 geroutet. Die Datenpakete weisen entsprechende Routing-Informationen auf.

Nach Aufbau der Verbindung werden die Daten des Rückkanals zunächst über das Paketvermittlungsnetz 3 schmalbandig an das Endgerät 1 übertragen (Schritt 102). Da die Rückkanal-Daten über den Switch 5 geroutet werden, ändert der Switch 5 beim Routing gegebenenfalls die IP-Adresse der Datenpakete zur Weiterleitung der Daten an das Endgerät 1.

Der Switch 5 prüft in regelmäßigen Abständen, ob ein durch den Nutzer des Endgerätes 1 ausgelöstes Steuersignal zum Wechseln des Rückkanals auf einen Rückkanal über Satellit vorliegt (Schritt 103). Ein derartiges Steuersignal signalisiert das Endgerät 1 dem Switch 5 beispielsweise im Rahmen eines einfachen Signalisierungsprotokolls; es wird ein entsprechender Befehl als Inband-Signal oder Außenband-Signal an den Switch 5 gesandt. Bei einem ISDN-Endgerät wird etwa auf dem B-Kanal eine bestimmte Bitfolge als Steuersignal an den Switch 5 gesandt.

Es wird darauf hingewiesen, daß das Steuersignal auf vielfältige Art und Weise verwirklicht werden kann, alternativ etwa auch als bestimmte Bit-Sequenz im Datenstrom.

Sobald der Switch 5 ein entsprechendes Steuersignal erhält, wechselt er während der bestehenden L7-Verbindung auf einen Breitband-Rückkanal über den Satelliten 8 (Schritt 104). Der Switch 5 dient insofern als Steuereinheit. Zum Wechseln auf einen Breitband-Rückkanal sendet der Switch 5 in Schritt 105 die Daten breitbandig zu dem Satelliten-Uplink 6, mit dem er etwa über ein Glasfaserkabel verbunden ist. Anschließend werden die Daten vom Satelliten-Uplink 6 breitbandig über den Satelliten 8 und die Satellitenantenne 91, 92 zum Endgerät 1 übertragen.

Statt der üblichen Bandbreite von 10 kbit/s oder auch 64 kbit/s (bei ISDN) über das Internet 3 und die schmalbandige "letzte Mile" vom Internetzugang 31 zum Endgerät erfolgt eine Datenübertragung nun mit einer Bandbreite von beispielsweise 38 Mbit/s.

Es wird darauf hingewiesen, daß bei Übertragen der Rückkanal-Daten vom Switch 5 zum Endgerät 1 über Satellit 8 das Format der Daten als IP-Datenpakete bevorzugt nicht verändert wird. Da das IP-Format der Daten bei der Satellitenübertragung erhalten bleibt, kann das Endgerät 1 die Header der IP-Pakete auswerten und hieran erkennen, welche Daten zu der zum Internet-Server 4 aufgebauten Verbindung, von dem die Daten heruntergeladen werden, gehören (Schritte 106 und 107). Dies ist wichtig, da die breitbandig vom Satelliten empfangenen Signale auch Daten enthalten, die für andere Nutzer bestimmte Daten sind.

Sofern ein Wechsel zurück zu einer schmalbandigen Übertragung über das Paketvermittlungsnetz und ISDN/POTS-Leitungen gewünscht wird, sendet der Nutzer oder das Netzwerkmanagement ein weiteres Steuersignal an den Switch 5, der die herunterzuladenden Daten dann wieder. über das Internet 3 routet. Darin liegt gerade der Gedanke der vorliegenden Erfindung, daß ein Nutzer während einer bestehenden L7-Verbindung entsprechend seinen Anforderungen an die Bandbreite, die Qualität und die Kosten der Verbindung dynamisch zwischen einer schmalbandigen Übertragung der Rückkanal-Daten über das Paketvermittlungsnetz 3 und einer breitbandigen Übertragung etwa über Satellit wählen kann.

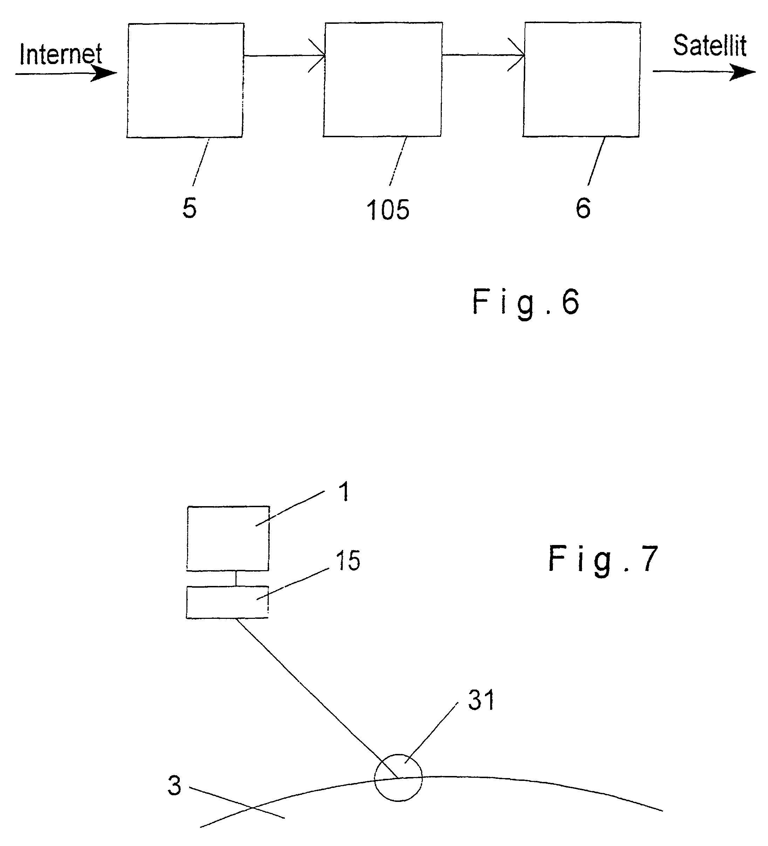

Eine Alternative der in Fig. 1 dargestellten Telekommunikationsanordnung ist in Fig. 7 wiedergegeben, wobei lediglich der Bereich zwischen Endgerät 1 und Zugang 31 zum Paketvermittlungsnetz 3 dargestellt ist. Die übrigen Komponenten des Systems sind unverändert.

In dieser Alternative ist dem Endgerät 1 unmittelbar ein Proxy-Server 15 zugeordnet. Bei einem Proxy-Server handelt es sich um eine Einheit, die Anfragen des Endgeräts 1 bzw. dessen Internet-Browsers entgegennimmt und einen eigenen Speicher (Cache) besitzt, in dem Internet-Seiten bzw. herunterzulandende Daten gespeichert sind. Wenn vom Nutzer angeforderte Internet-Seiten bzw. Daten nicht im Cache enthalten sind, baut der Proxy-Server 15 eine Verbindung zum Herunterladen der gewünschten Information auf. Der Proxy-Server ist beispielsweise als Software am Endgerät 1 installiert. Es kann sich jedoch ebenso um ein eigenständiges Gerät handeln.

Der Proxy-Server baut beim "Surfen" des Nutzers im Internet zunächst eine Verbindung zum einem gewünschten Server 4 über das Paketvermittlungsnetz 3 auf. Eine Datenrückübertragung erfolgt schmalbandig. Das Verfahren verläuft wir in Bezug auf Fig. 1 beschrieben.

Der Proxy-Server 15 prüft dabei ständig, ob ein durch den Nutzer des Endgerätes 1 oder'ein Netzwerkmanagement ausgelöstes Steuersignal zum Übergang auf eine Rückkanal-Datenübertragung via Breitband-Rückkanal vorliegt. Für diesen Fall baut der Proxy-Server 15 über den Breitband-Zugangsswitch 5 eine völlig neue Verbindung zum Server 4 auf. Die alte Verbindung zum Server 4 über das schmalbandige Netz kann dabei wahlweise beibehalten oder getrennt werden.

Der Proxy-Server 15 übersendet dem Breitband-Zugangsswitch (5) dabei als Innenband- oder Außenbandsignal Steuerbefehle dahingehend, vom Server (4) erhaltenen Rückkanal-Daten auf den Breitband-Rückkanal zu geben. Dementsprechend gibt der Breitband-Zugangsswitch (5) die vom Server (4) erhaltenen Rückkanal-Daten auf den Breitband-Rückkanal, so daß sie über den Satellit 8 zum Endgerät übertragen werden.

Dabei ist bevorzugt vorgesehen, sofern ein Teil der herunterzuladenden Daten vom Endgerät 1 bereits schmalbandig über das Internet empfangen wurde, dem Server die Stelle in der herunterzuladenden Datei mitzuteilen, ab der die Datenübertragung erfolgen soll. Hierdurch wird ein unnötiges Übertragen bereits beim Endgerät vorhandener Daten vermieden.

Das Verfahren entspricht vom Prinzip her dem Verfahren gemäß Fig. 2, wobei die Prüfung, ob ein Steuersignal zum Übergang auf einen Breitband-Rückkanal vorliegt, vom Proxy-Server 15 vorgenommen wird, der insofern als Steuereinheit dient.

In einem weiteren alternativen Verfahren wird gemäß Fig. 3 in einem ersten Schritt 201 direkt eine L7-Verbindung zwischen dem Endgerät 1 und dem Internet-Server 4 aufgebaut, wobei diese Verbindung nicht notwendigerweise unter Zwischenschaltung des Switches 5 erfolgt. Herunterzuladende Rückkanal-Daten werden zunächst über das Paketvermittlungsnetz 3 und die ISDN/POTS-Leitungen an das Endgerät 1 übertragen (Schritt 202).

Es prüfen nun in Schritt 203 in regelmäßigen Abständen (etwa 1 ms) sowohl der Internet-Server 4 als auch der Switch 5, ob ein vom Nutzer des Endgerätes 1 ausgelöstes Steuersignal zum Wechsel des Rückkanals vorliegt. Als Steuersignal dient beispielsweise eine bestimmte Bit-Sequenz, die über das Internet 3 vom Endgerät sowohl an den Switch 5 als auch den Internet-Server 4 gesandt wird.

Bei Vorliegen eines entsprechenden Steuersignals überträgt der Server 4 herunterzuladende Rückkanal-Daten nun breitbandig an den Switch 5, sofern das nicht bereits ohnehin der Fall war (Schritt 204). Vom Switch 5 werden die Rückkanal-Daten dann wie in bezug auf Figur 2 beschrieben über den Satelliten 8 breitbandig zum Endgerät 1 übertragen (Schritt 205).

Bei dieser Variante sind sowohl im Internet-Server 4 als auch im Switch 5 Mittel zum Erkennen eines Steuersignals und Mittel zu einem entsprechenden Routen der Rückkanal-Daten vorgesehen.

Es wird darauf hingewiesen, daß eine breitbandige Übertragung der Rückkanal-Daten vom Server 4 zum Switch 5 kein Problem darstellt, da Server und Switches des Internet in der Regel breitbandig, etwa über Glasfasernetze, miteinander verbunden sind.

In einer leichten Abwandlung der beschriebenen Verfahren ist vorgesehen, den Breitband-Rückkanal zu der schmalbandigen Übertragung über das Internet 3 hinzuzuschalten, ohne die Übertragung über das Internet 3 abzubrechen. Dabei werden die weiterhin über das Internet 3 übersandten Daten bevorzugt beim Empfänger bzw. einer diesem vorgelagerten Vermittlungsstelle unterdrückt bzw. mißachtet, da sie nicht gebraucht werden. In einer anderen Variante werden über das Internet andere Daten übertragen als über den Breitband-Rückkanal.

Eine Weiterbildung der in Fig. 1 dargestellten Telekommunikationsanordnung ist in Fig. 6 wiedergegeben, wobei lediglich der Bereich zwischen Breitband-Zugangsswitch 5 und Satelliten-Uplink 6 dargestellt ist. Die übrigen Komponenten des Systems sind unverändert.

Zwischen Switch 5 und Satelliten-Uplink 6 ist eine Bandbreitenregulierungsvorrichtung 105 angeordnet, mit deren Hilfe der Nutzer des Endgeräts 1 die Bandbreite der über den Satellit 8 an das Endgerät 1 erfolgenden Datenübertragung einstellen kann. Es wird ihm hierdurch ermöglicht, bestimmte Geschwindigkeits- bzw. Dienstgüteklassen einzustellen. Der Wechsel zwischen verschiedenen Bandbreiten bzw. Dienstgüteklassen kann dynamisch während einer bestehenden Verbindung erfolgen. Dies ermöglicht dem Nutzer, auch während einer Verbindung die Übertragungsgeschwindigkeit zu ändern.

Die Bandbreitenregulierungsvorrichtung 105 stellt zieladressenspezifisch die Bandbreite der Datenübertragung an eine bestimmte Zieladresse ein. Hierzu prüft die Bandbreitenregulierungsvorrichtung 105 die Adresse der ankommenden Daten, die in der Regel in Datenpaketen angeordnet sind, und gibt die zu einer bestimmten Adresse gehörenden Daten bzw. Datenpakete nur mit einer Geschwindigkeit an den Satelliten-Uplink 6 weiter, die der vom Nutzer vorgegebenen Bandbreite entspricht. Hierdurch wird eine bestimmte Geschwindigkeitsstufe eingestellt. Mit der eingestellten Bandbreite werden die Daten vom Satelliten-Uplink zum Satellit 8 und weiter bis zum Endgerät 1 übertragen.

Es sei an dieser Stelle darauf hingewiesen, daß die Bezeichnung "Endgerät" beispielhaft für irgendeine Kommunikations Endeinrichtung zu verstehen ist. Es kann sich bei dem "Endgerät" beispielsweise ebenso um eine Telekommunikationsanlage handeln, die ein internes Firmennetz bedient.

Zur Steuerung der vom Nutzer gewünschten Bandbreite des Breitband-Rückkanals sendet dieser mittels einer Inbandoder Außenbandsignalisierung entsprechende Steuerbefehle an den Switch 5, der diese Signalisierungsinformationen an die Bandbreitenregulierungsvorrichtung 105 weiterleitet. Die Steuerinformationen betreffen die Information, zu einer bestimmten Adresse eine bestimmte Bandbreite einzustellen.

Die Bandbreitenregulierungsvorrichtung 105 erfaßt die Adresseninformationen der eingehenden Datenpakete und überprüft fortlaufend, und damit auch während einer bestehenden Verbindung, ob zu einer bestimmten Adresse eine bestimmte, maximale Bandbreite ausgewählt wurde. Für diesen Fall werden die Daten bzw. Datenpakete mit einer entsprechenden Geschwindigkeit an den Satelliten-Uplink 6 weitergeleitet.

Alternativ können die Steuersignale auch von einem Managementsystem übersandt werden, das beispielsweise sicherzustellen hat, daß die maximalen Gebühren des Teilnehmers in einem bestimmten Zeitraum, wie einem Monat, einen vorgegebenen Betrag nicht oder nicht wesentlich überschreiten.

Die Bandbreitenregulierungsvorrichtung 105 ist in einer Ausgestaltung der Erfindung in den Breitband-Zugangsswitch 5 integriert.

Figur 4 zeigt ein Kommunikationssystem, bei dem im Vergleich zu dem Kommunikationssystem der Figur 1 der breitbandige Rückkanal nicht durch eine Satellitenstrecke, sondern durch eine ADS-L-Übertragungsstrecke realisiert wird. Dieses Beispiel dient allein dem besseren Verständnis der Erfindung und stellt keine Ausführungsart der Erfindung dar.

Ein Endgerät 1' ist über ein Breitband-Empfangssystem 2' (hier: ein ADSL-Modem, das als Karte oder externe Box ausgeführt ist) und eine ADSL-betriebene Teilnehmeranschluß-Kupferleitung 11 an eine Vermittlungsstelle angeschlossen. Die Vermittlungsstelle weist u.a. einen Frequenz-Splitter 12, ein Koppelfeld 13 und einen Switch 5' auf, der mit einem Paketvermittlungsnetz 3 bzw. Servern 4 des Paketvermittlungsnetzes 3 breitbandig verbunden ist.

Der Frequenz-Splitter 12 trennt das Sprachband und das ADSL-Band der ADSL-Leitung 11 und ist bezüglich der hochfrequenten Signale des ADSL-Bands breitbandig mit dem Switch 5' und bezüglich der niederfrequenten Signale des Sprachbands schmalbandig mit dem Koppelfeld 13 verbunden. Das Koppelfeld 13 weist in bekannter Weise zahlreiche Ein-/Ausgänge zu einem ISDN/POTS Netz auf. Weiter ist es schmalbandig mit dem Switch 5' verbunden.

Es wird beispielsweise zunächst über das Koppelfeld 13 und den Switch 5' eine Verbindung zu einem Server 4 des Internets 3 aufgebaut und werden Rückkanal-Daten schmalbandig heruntergeladen. Die Übertragung der Rückkanal-Daten bis zum Switch 5' erfolgt dabei breitbandig. Die Schmalbandigkeit entsteht aufgrund der Übertragung der Daten vom Switch 5' zum Endgerät 1' über das Koppelfeld 13 und das Sprachband der ADSL-betriebenen Teilnehmeranschlußleitung 11.

Bei Vorliegen eines entsprechenden Steuersignals des Nutzes oder eines Netzwerkmanagements werden die Rückkanal-Daten vom Switch 5 nicht mehr an das Koppelfeld 13, sondern breitbandig direkt an den Frequenz-Splitter 12 und gemäß üblichen ADSL-Übertragungsverfahren über die ADSL-betriebene Teilnehmeranschluß-Kupferleitung 11 an das Endgerät 1' übertragen. Dabei kann eine Bandbreite von bis zu 8 Mbit/s zur Verfügung gestellt werden. Bei einem weiteren Steuerbefehl erfolgt erneut eine schmalbandige Übertragung über das Koppelfeld 13, so daß der Nutzer wiederum entsprechend seinen Wünschen zwischen einem breitbandigen und einem schmalbandigen Rückkanal wechseln kann.

Dieses alternative Kommunikationssystem stellt im Teilnehmerzugangs-Netz einen Breitband-Rückkanal zum Endgerät 1' zur Verfügung, ermöglicht insbesondere wahlweise eine breitbandige Überbrückung der schmalbandigen "letzten Meile" zum Endgerät.

Es wird darauf hingewiesen, daß der Switch auch außerhalb der Vermittlungsstelle angeordnet sein kann, bei grundsätzlich gleicher Verbindung zum Koppelfeld 13 und Frequenz-Splitter 12.

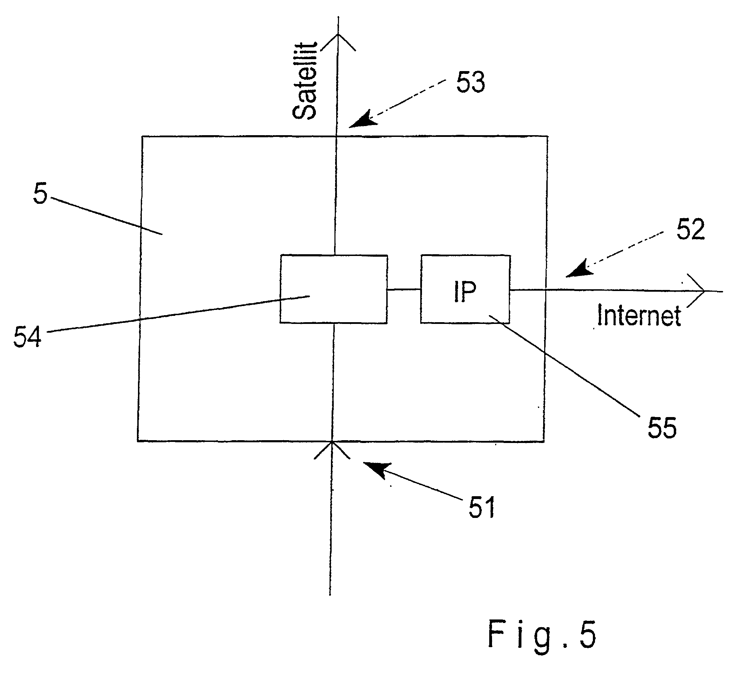

In Figur 5 ist ein erfindungsgemäßer Switch 5 dargestellt, wie er bei dem Verfahren gemäß Figuren 2 und 3 verwendet wird. Der Switch 5 weist einen Eingang 51 zum Paketvermittlungsnetz 3, einen Ausgang 52 zum Paketvermittlungsnetz 3 und einen Ausgang 53 zu einem Breitband-Rückkanal, etwa eine Satellitenübertragung, auf. Eine Steuereinrichtung 54 legt in Abhängigkeit von den Vorgaben des Nutzers fest, ob über den Eingang 51 vom Paketvermittlungsnetz erhaltene Daten über das Paketvermittlungsnetz (Ausgang 52) oder über einen Breitband-Rückkanal (Ausgang 53) weitergeleitet werden. Hierzu weist die Steuereinrichtung 54 Mittel zum Auswerten entsprechender Steuersignale auf. Die Steuereinrichtung wird bevorzugt durch einen Mikroprozessor und geeignete Software gebildet.

Zwischen der Steuereinrichtung 54 und dem Ausgang 52 zum Paketvermittlungsnetz ist ein IP-Router 55 angeordnet, der die übliche Funktionalität eines IP-Routers bzw. IP-Switches aufweist und Datenpakete an das Internet 3 routet.

Die Eingänge und Ausgänge 51, 52, 53 des Switchs 5 sind auch in umgekehrter Richtung als Eingänge 52, 53 und Ausgang 51 betreibbar, je nach Richtung der Datenübertragung.

Bei der Steuereinrichtung 54 handelt es sich im wesentlichen um einen logischen Schalter, der die ankommenden Datenpakete in Abhängigkeit von den Steuerbefehlen des Nutzers entweder zu dem IP-Router 55 oder über den Ausgang 53 auf den Breitband-Rückkanal, etwa eine Glasfaserstrecke zu einem Satelliten-Uplink, leitet. Darüber hinaus werden jedoch auch Signalisierungsaufgaben wahrgenommen, soweit sie zur Übertragung der Daten über den Breitband-Rückkanal erforderlich sind. Etwa wird bei einem ADSL-Rückkanal in an sich bekannter Weise eine Signalisierung nach dem Protokoll SS7 zu der dem Endgerät zugeordneten Ortsvermittlungsstelle vorgenommen.

In einer alternativen Anordnung des Switches 5 ist dieser an seinem Ausgang 52 nicht notwendigerweise an ein Paketvermittlungsnetz angeschlossen, sondern an eine beliebige schmalbandige TK-Infrastruktur, etwa ein Koppelfeld einer Ortsvermittlungsstelle (vgl. Fig. 4).

## Patentansprüche

1. Verfahren zur Übertragung von Rückkanal-Daten in einer Verbindung zwischen einem Endgerät und einem Server eines Paketvermittlungsnetzes, zumindest auf einer Teilstrecke des Rückkanals wahlweise schmalbandig über das Paketvermittlungsnetz und/oder POTS/ISDN-Leitungen und/oder breitbandig über einen Breitband-Rückkanal, mit folgenden Schritten:
a) Aufbau einer Verbindung zwischen dem Endgerät (1) und dem Server (4) über das Paketvermittlungsnetz (3),
b) schmalbandiges Übertragen von Rückkanal-Daten vom Server (4) zum Endgerät (1),
c) wiederholtes Prüfen beim Server (4) und/oder einer Steuereinheit (5, 15), die Teil des Paketvermittlungsnetzes (3) ist oder zu diesem Zugang hat, ob ein durch den Nutzer des Endgerätes (1) oder ein Netzwerkmanagement ausgelöstes Steuersignal zum Zuschalten einer Rückkanal-Datenübertragung via Breitband-Rückkanal vorliegt,
d) Zuschalten eines Breitband-Rückkanals während der bestehenden Verbindung bei Vorliegen eines entsprechenden Steuersignals, wobei Rückkanal-Daten zunächst breitbandig vom Server (4) zu einem Breitband-Zugangsswitch (5) übertragen und dann vom Breitband-Zugangsswitch (5) auf den Breitband-Rückkanal gegeben werden,
e) Zurückwechseln auf eine allein schmalbandige Übertragung der Rückkanal-Daten, sofern ein entsprechendes weiteres Steuersignal des Nutzers oder des Netzwerkmanagements vorliegt, wobei
f) der Breitband-Rückkanal durch eine Satelliten-Übertragungsstrecke realisiert wird und ein Übertragen der Daten vom Breitband-Zugangsswitch (5) zum Endgerät via Satellit die folgenden Schritte beeinhaltet:
g) Breitbandiges Übertragen der Rückkanal-Daten vom Breitband-Zugangsswitch (5) zu einem Satelliten-Uplink (6) bei Vorliegen des entsprechenden Steuersignals,
h) Senden der Daten vom Satelliten-Uplink (6) zu einem Satellit (8),
i) Ausstrahlung der Daten vom Satelliten (8) und
j) Empfang der Daten und Übertragen der Daten zum Endgerät (1).

2. Verfahren nach Anspruch 1, bei dem die Steuereinheit gleich dem Breitband-Zugangsswitch (5) ist und eine Verbindung zwischen dem Endgerät und dem Server stets unter Zwischenschaltung des Breitband-Zugangsswitches (5) hergestellt wird und Daten vom Endgerät zum Server und vom Server zum Endgerät unter Zwischenschaltung des Breitband-Zugangswitches übertragen werden, wobei
a) der Breitband-Zugangsswitch (5) prüft, ob ein durch den Nutzer des Endgerätes (1) oder ein Netzwerkmanagement ausgelöstes Steuersignal zum Zuschalten einer Rückkanal-Datenübertragung via Breitband-Rückkanal vorliegt, und
b) die vom Server (4) erhaltenen Rückkanal-Daten für diesen Fall vom Breitband-Zugangsswitch (5) zusätzlich über den Breitband-Rückkanal zum Endgerät (1) übertragen werden.

3. Verfahren nach Anspruch 2, bei dem das Steuersignal zum Dazuschalten eines Breitband-Rückkanals bzw. zum Übergang auf eine schmalbandige Übertragung im Rahmen eines Signalisierungsprotokolls zwischen dem Endgerät (1) und dem Switch (5) übertragen wird.

4. Verfahren nach Anspruch 1, bei dem die Steuereinheit ein dem Endgerät (1) zugeordneter Proxy-Server (15) ist, und
a) der Proxy-Server (15) prüft, ob ein durch den Nutzer des Endgerätes (1) oder ein Netzwerkmanagement ausgelöstes Steuersignal zum Zuschalten einer Rückkanal-Datenübertragung via Breitband-Rückkanal via Breitband-Rückkanal vorliegt,
b) der Proxy-Server (15) für diesen Fall über den Breitband-Zugangsswitch (5) eine neue Verbindung zum Server (4) aufbaut und dem Breitband-Zugangsswitch (5) Steuerbefehle dahingehend überträgt, vom Server (4) erhaltene Rückkanal-Daten auf den Breitband-Rückkanal zu geben und
c) der Breitband-Zugangsswitch (5) die vom Server (4) erhaltenen Rückkanal-Daten entsprechend den erhaltenen Steuerbefehlen auf den Breitband-Rückkanal gibt.

5. Verfahren nach Anspruch 4, bei dem der Proxy-Server (15) dem Server (4) für den Fall, daß ein Teil der herunterzuladenden Daten vom Endgerät (1) bereits über das Paketvermittlungsnetz empfangen wurden, die Stelle in der herunterzuladenden Datei mitteilt, ab der die Datenübertragung erfolgen soll.

6. Verfahren nach Anspruch 1, bei dem eine Verbindung direkt zwischen dem Endgerät und dem Server des Paketvermittlungsnetzes hergestellt wird, wobei
a) sowohl der Server (4) als auch der Breitband-Zugangsswitch (5) prüfen, ob ein vom Nutzer oder Netzwerkmanagement ausgelöstes Steuersignal zum Zuschalten einer Rückkanal-Datenübertragung via Breitband-Rückkanal vorliegt, und für diesen Fall
b) Rückkanal-Daten vom Server (4) zum Breitband-Zugangsswitch (5) übertragen und anschließend vom Breitband-Zugangsswitch (5) auf den Breitband-Rückkanal zum Endgerät (1) gegeben werden.

7. Verfahren nach einem der vorangehenden Ansprüche, bei dem das Steuersignal durch eine bestimmte Bit-Sequenz dargestellt wird.

8. Verfahren nach einem der vorangehenden Ansprüche, bei dem die Rückkanal-Daten bei der Übertragung über Breitband-Rückkanal in Ihrem Format als Datenpakete erhalten bleiben.

9. Verfahren nach einem der vorangehenden Ansprüche, bei dem der Nutzer oder ein Netzwerkmanagement die Bandbreite der über den Breitband-Rückkanal zum Endgerät erfolgenden Datenübertragung einstellt.

10. Verfahren nach Anspruch 9, bei dem der Nutzer oder ein Netzwerkmanagement die Bandbreite der Datenübertragung über den Breitband-Rückkanal dynamisch während der bestehenden Verbindung einstellt.

11. Verfahren nach Anspruch 9 oder 10, bei dem bestimmte maximale Bandbreiten der Datenrückübertragung auf dem Breitband-Rückkanal vorgesehen sind, zwischen denen der Nutzer während einer Verbindung dynamisch wechselt.

12. Verfahren nach einem der Ansprüche 9 bis 11, bei dem zur zieladressenspezifischen Einstellung der Bandbreite der Datenübertragung die für eine bestimmte Adresse bestimmten Datenpakete mit einer Geschwindigkeit auf den Breitband-Rückkanal gegeben werden, die der vom Nutzer ausgewählten Bandbreite entspricht.

13. Verfahren nach einem der vorangehenden Ansprüche , bei dem die Rückkanal-Daten zwischen Breitband-Zugangsswitch (5) und Satelliten-Uplink (6) eine Bandbreitenregulierungsvorrichtung (105) durchlaufen, die jeweils für eine bestimmte Adresse bestimmten Datenpakete mit einer Geschwindigkeit zum Satelliten-Uplink (6) überträgt, die der vom Nutzer oder einem Netzwerkmanagement für den Rückkanal ausgewählten Bandbreite entspricht.

14. Verfahren nach einem der vorangehenden Ansprüche, bei dem das Endgerät (1) die Adreßfelder der über Satellit erhaltenen Datenpakete auswertet, um die für ihn bestimmten Daten zu erkennen.

15. Verfahren nach einem der vorangehenden Ansprüche, bei dem die vom Satellit (8) ausgestrahlten Daten mittels einer dem Endgerät (1) zugeordneten Sattelitenschüssel (91, 92) empfangen werden.

16. Verfahren nach einem der vorangehenden Ansprüche, bei dem die vom Satellit ausgestrahlten Daten mittels einer Kabelkopfstation eines Kabelbetreibers empfangen, in das entsprechende Kabelnetz eingegeben und über Kabel vom Endgerät empfangen werden.

17. Switch zur Durchführung des Verfahrens nach Anspruch 1 mit einer Steuereinrichtung (54) und zwei Ausgängen (52, 53), wobei die Steuereinrichtung (54) derart ausgestaltet ist, daß sie in Abhängigkeit von Steuersignalen eines Nutzers eines Endgeräts (1) oder eines Netzwerkmanagements ankommende Daten einer Verbindung an die beiden Ausgänge (52, 54) verteilt,
**dadurch gekennzeichnet,**
**dass** die Steuereinrichtung (54) derart ausgestaltet ist, daß sie in Abhängigkeit von Steuersignalen eines Nutzers eines Endgeräts (1) oder eines Netzwerkmanagements ankommende Daten einer Verbindung entweder an den einen, mit einer schmalbandigen TK-Infrastruktur verbundenen Ausgang (52) oder an den mit der schmalbandigen TK-Infrastruktur verbundenen Ausgang (52) und zusätzlich an den anderen, mit einer Satelliten-Übertragungsstrecke verbundenen Ausgang (53) leitet.

18. Switch nach Anspruch 17, bei dem die Steuereinrichtung (54) Mittel zum Erkennen und Auswerten von Steuersignalen aufweist.

19. Anordnung mit einem Switch nach Anspruch 17 oder 18, wobei dem Switch (5) eine Bandbreitenregulierungsvorrichtung (105) zugeordnet ist, die derart ausgestaltet ist, daß sie zur zieladressenspezifischen Einstellung der Bandbreite der Datenübertragung über die Satelliten-Übertragungsstrecke die für eine bestimmte Adresse bestimmten Datenpakete mit einer Geschwindigkeit an die Satelliten-Übertragungsstrecke leitet, die einer vom Nutzer oder einem Netzwerkmanagement ausgewählten Bandbreite entspricht.

## Claims

1. Method for transmitting return channel data in a link between a terminal and a server of a packet-switching network, at least on a section of the return channel optionally with narrow bandwidth via the packet-switching network and/or POTS/ISDN lines and/or with wide bandwidth via a wideband return channel, comprising the following steps:
a) setting up a connection between the terminal (1) and the server (4) via the packet-switching network (3),
b) narrow-band transmission of return-channel data from the server (4) to the terminal (1),
c) repeated checking at the server (4) and/or a control unit (5, 15) which is part of the packet-switching network (3) or has access to it, whether a control signal triggered by the user of the terminal (1) or a network manager for adding a return-channel data transmission via wideband return channel is present,
d) adding a wideband return channel during the existing connection when a corresponding control signal is present, return channel data first being transmitted in wideband width from the server (4) to a wideband access switch (5) and then being applied to the wideband return channel by the wideband access switch (5),
e) changing back to transmitting the return channel only with narrow bandwidth as long as a corresponding further control signal of the user or of the network manager is present,
f) the wideband return channel being implemented by a satellite transmission link and transmitting the data from the wideband access switch (5) to the terminal via satellite including the following steps:
g) transmitting the return channel data in wide bandwidth from the wideband access switch (5) to a satellite uplink (6) when the corresponding control signal is present,
h) sending the data from the satellite uplink (6) to a satellite (8),
i) broadcasting the data from the satellite (8) and
j) receiving the data and transmitting the data to the terminal (1).

2. Method according to Claim 1, in which the control unit is identical with the wideband access switch (5) and a connection between the terminal and the server is always established with interposition of the wideband access switch (5) and data are transmitted from the terminal to the server and from the server to the terminal with interposition of the wideband access switch, wherein
a) the wideband access switch (5) checks whether a control signal for adding a return-channel data transmission via wideband return channel, triggered by the user of the terminal (1) or by a network manager, is present and
b) the return channel data received from the server (4) are in this case additionally transmitted by the wideband access switch (5) via the wideband return channel to the terminal (1).

3. Method according to Claim 2, in which the control signal for adding a wideband return channel or, respectively, for changing to a narrow-band transmission is transmitted in a signalling protocol between the terminal (1) and the switch (5).

4. Method according to Claim 1, in which the control unit is a proxy server (15) associated with the terminal (1), and
a) the proxy server (15) checks whether a control signal for adding a return channel data transmission via wideband return channel, triggered by the user of a terminal (1) or by a network manager, is present via wideband return channel,
b) the proxy server (15) in this case sets up a new connection to the server (4) via the wideband access switch (5) and transmits to the wideband access switch (5) control instructions to apply return channel data received from the server (4) to the wideband return channel, and
c) the wideband access switch (5) applies the return channel data received from the server (4) to the wideband return channel in accordance with the control instructions received.

5. Method according to Claim 4, in which the proxy server (15) informs the server (4) in the case where a part of the data to be downloaded has already been received by the terminal (1) via the packet-switching network, about the place in the file to be downloaded from which the data transmission is to take place.

6. Method according to Claim 1, in which a connection is established directly between the terminal and the server of the packet-switching network, wherein
a) both the server (4) and the wideband access switch (5) check whether a control signal for adding a return channel data transmission via wideband return channel, triggered by the user or the network manager, is present and in this case
b) return channel data are transmitted from the server (4) to the wideband access switch (5) and then applied to the wideband return channel to the terminal (1) by the wideband access switch (5).

7. Method according to one of the preceding claims, in which the control signal is represented by a particular bit sequence.

8. Method according to one of the preceding claims, in which the format of the return channel data as data packets is retained during the transmission via wideband return channel.

9. Method according to one of the preceding claims, in which the user or a network manager sets the bandwidth of the data transmission taking place via the wideband return channel to the terminal.

10. Method according to Claim 9, in which the user or a network manager dynamically sets the bandwidth of the data transmission via the wideband return channel during the existing connection.

11. Method according to Claim 9 or 10, in which particular maximum bandwidths of the data return transmission on the wideband return channel are provided between which the user dynamically changes during a connection.

12. Method according to one of Claims 9 to 11, in which, for destination-address-specific setting of the bandwidth of the data transmission, the data packets intended for a particular address are applied to the wideband return channel at a speed which corresponds to the bandwidth selected by the user.

13. Method according to one of the preceding claims, in which the return channel data, between the wideband access switch (5) and the satellite uplink (6), pass through a bandwidth regulating device (105) which in each case transmits data packets intended for a particular address to the satellite uplink (6) at a speed which corresponds to the bandwidth selected by the user or by a network manager for the return channel.

14. Method according to one of the preceding claims, in which the terminal (1) evaluates the address fields of the data packets received via satellite in order to detect the data intended for it.

15. Method according to one of the preceding claims, in which the data broadcast by the satellite (8) are received by means of a satellite dish (91, 92) associated with the terminal (1).

16. Method according to one of the preceding claims, in which the data broadcast by the satellite are received by means of a cable head station of a cable operator, are input into the corresponding cable network and are received by the terminal via cable.

17. Switch for carrying out the method according to Claim 1, comprising a control device (54) and two outputs (52, 53), the control device (54) being designed in such a manner that it distributes incoming data of a connection, in dependence on control signals of a user of a terminal (1) or of a network manager, to the two outputs (52, 54), **characterized in that** the control device (54) is designed in such a manner that it conducts incoming data of a connection in dependence on control signals of a user of a terminal (1) or of a network manager, either to the one output (52) connected to the narrow-band telecommunication infrastructure or to the output (52) connected to the narrow-band telecommunication infrastructure and additionally to the other output (53) connected to a satellite transmission link.

18. Switch according to Claim 17, in which the control device (54) exhibits means for detecting and evaluating control signals.

19. Arrangement comprising a switch according to Claim 17 or 18, the switch (5) being associated with a bandwidth regulating device (105) which is designed in such a manner that it conducts the data packets intended for a particular address, for the destination-address-specific setting of the bandwidth of the data transmission via the satellite transmission link, to the satellite transmission link at a speed which corresponds to a bandwidth selected by the user or by a network manager.

## Revendications

1. Procédé de transmission de données d'un canal retour dans une connexion entre un terminal et un serveur d'un réseau de communication par paquets, au moins sur une portion du chemin du canal retour, sélectivement en bande étroite par le réseau de transmission par paquets et/ou des liaisons POTS/ISDN et/ou en large bande par un canal retour à large bande, comprenant les étapes suivantes :
a) établissement d'une connexion entre le terminal (1) et le serveur (4) par le réseau de transmission par paquets (3),
b) transmission en bande étroite de données du canal retour depuis le serveur (4) au terminal (1),
c) vérification répétée au niveau du serveur (4) et/ou d'une unité de commande (5, 15) faisant partie du, ou ayant accès au réseau de transmission par paquets (3) pour détecter la présence d'un signal de commande pour connecter une transmission de données du canal retour via le canal retour à large bande déclenché par l'utilisateur d'un terminal (1) ou par une gestion du réseau,
d) connexion d'un canal retour à large bande pendant la connexion établie en présence d'un signal de commande correspondant, les données du canal-retour étant d'abord transmises en large bande depuis le serveur (4) à un commutateur d'accès à large bande (5) et ensuite du commutateur d'accès à large bande (5) au canal retour à large bande,
e) retour à une transmission uniquement à bande étroite des données du canal retour dans la mesure où un autre signal de commande correspondant de l'utilisateur ou de la gestion du réseau est présent,
f) le canal retour à large bande étant réalisé par une voie de transmission par satellite et une transmission de données par satellite depuis le commutateur d'accès à large bande (5) jusqu'au terminal comprenant les étapes suivantes :
g) transmission à large bande des données du canal retour depuis le commutateur d'accès à large bande (5) à une voie montante de satellite (6) en présence du signal de commande correspondant,
h) envoi des données par la voie montante de satellite (6) à un satellite (8),
i) émission des données depuis le satellite (8) et
j) réception des données et transmission des données au terminal (1).

2. Procédé selon la revendication 1, dans lequel l'unité de commande correspond au commutateur d'accès à large bande (5) et dans lequel une connexion entre le terminal et le serveur se fait toujours en intercalant le commutateur d'accès à large bande (5), et dans lequel les données sont transmises du terminal au serveur et du serveur au terminal en intercalant le switch d'accès à large bande,
a) le commutateur d'accès à large bande (5) vérifiant la présence d'un signal de commande pour la connexion d'une transmission de données du canal retour via le canal retour à large bande, déclenché par l'utilisateur du terminal (1) ou par une gestion du réseau, et
b) les données du canal retour reçues du serveur (4), dans ce cas du commutateur d'accès à large bande (5), étant en outre transmises via le canal retour à large bande au terminal (1).

3. Procédé selon la revendication 2, dans lequel le signal de commande pour la connexion d'un canal retour à large bande ou respectivement pour le passage à une transmission à bande étroite dans le cadre d'un protocole de signalisation est transmis entre le terminal (1) et le commutateur (5).

4. Procédé selon la revendication 1, dans lequel l'unité de commande est un serveur proxy (15) associé au terminal (1) et
a) le serveur proxy (15) vérifie la présence d'un signal de commande pour la connexion d'une transmission de données du canal retour via le canal retour à large bande, déclenché par l'utilisateur du terminal (1) ou par une gestion du réseau à large bande via le canal de retour,
b) le serveur proxy (15) établit dans ce cas une nouvelle connexion au serveur (4) via le commutateur d'accès à large bande (5) et transmet des commandes au commutateur d'accès à large bande (5) pour qu'il fournisse des données du canal retour reçues du serveur (4) sur le canal retour à large bande et
c) le commutateur d'accès à large bande (5) donne les données du canal retour reçues par le serveur (4) sur le canal retour à large bande selon les commandes reçues.

5. Procédé selon la revendication 4, dans lequel en cas de réception préalable par le terminal (1), via le réseau de communication par paquets d'une partie des données à télécharger le serveur proxy (15) communique au serveur (4) l'endroit dans le fichier à télécharger, à partir duquel la transmission de données doit s'effectuer.

6. Procédé selon la revendication 1, dans lequel une connexion est établie directement entre le terminal et le serveur du réseau de communication par paquets,
a) aussi bien le serveur (4) que le commutateur d'accès à large bande (5) vérifiant la présence d'un signal de commande pour la connexion d'une transmission de données du canal retour via le canal retour à large bande, déclenché par l'utilisateur ou par la gestion du réseau, et dans ce cas,
b) des données du canal retour étant transmises depuis le serveur (4) au commutateur d'accès à large bande (5) et ensuite données du commutateur d'accès à large bande (5) sur le canal retour à large bande au terminal (1).

7. Procédé selon l'une quelconque des revendications précédentes, dans lequel le signal de commande est représenté par une séquence de bits déterminée.

8. Procédé selon l'une quelconque des revendications précédentes, dans lequel les données du canal retour sont maintenues leur format en tant que paquet de données lors de la transmission via le canal retour à large bande.

9. Procédé selon l'une quelconque des revendications précédentes, dans lequel l'utilisateur ou une gestion de réseau règle la largeur de bande de la transmission de données s'effectuant via le canal retour à large bande jusqu'au terminal.

10. Procédé selon la revendication 9, dans lequel l'utilisateur ou une gestion du réseau règle la largeur de bande de la transmission de données via le canal retour à large bande de façon dynamique pendant la connexion établie.

11. Procédé selon la revendication 9 ou 10, dans lequel des largeurs de bande maximales déterminées de la transmission de données sont prévues sur le canal retour à large bande, entre lesquelles l'utilisateur change de façon dynamique pendant la connexion.

12. Procédé selon l'une quelconque des revendications 9 à 11, dans lequel pour le réglage de la largeur de bande de la transmission de données spécifique à l'adresse cible, les paquets de données destinées à une adresse précise sont délivrées sur le canal retour à large bande à une vitesse correspondant à la largeur de bande choisie par l'utilisateur.

13. Procédé selon l'une quelconque des revendications précédentes, dans lequel les données du canal retour passent par un dispositif de réglage de largeur de bande (105) entre le commutateur d'accès à large bande (5) et la voie montante de satellite (6), qui transmet respectivement les paquets de données destinés à une adresse précise à la voie montante de satellite (6) à une vitesse correspondant à la largeur de bande choisie par l'utilisateur ou par une gestion du réseau pour le canal de retour.

14. Procédé selon l'une quelconque des revendications précédentes, dans lequel le terminal (1) évalue les champs d'adresse des paquets de données reçus par satellite pour reconnaître les données qui lui sont destinées.

15. Procédé selon l'une quelconque des revendications précédentes, dans lequel les données émises par le satellite (8) sont reçues par une parabole satellite (91, 92) associée au terminal (1).

16. Procédé selon l'une quelconque des revendications précédentes, dans lequel les données émises par le satellite sont reçues au moyen d'une tête de réseau par câble d'un opérateur de câbles, sont entrées dans le réseau de câbles correspondant et reçues par le terminal via le câble.

17. Commutateur pour mettre en oeuvre le procédé selon la revendication 1 avec un dispositif de commande (54) et deux sorties (52, 53), le dispositif de commande (54) étant réalisé de telle façon qu'il répartisse des données d'une connexion aux deux sorties (52, 54) en fonction des signaux de commande provenant d'un utilisateur d'un terminal (1) ou d'une gestion de réseau,
**caractérisé en ce que** le dispositif de commande (54) est réalisé de telle façon qu'il répartit les données provenant d'une connexion, soit à une sortie (52) reliée à une infrastructure de télécommunication à bande étroite (52), soit à la sortie reliée à l'infrastructure de télécommunication à bande étroite et en plus à la sortie reliée à la voie de transmission par satellite (53) en fonction des signaux de commande d'un utilisateur d'un terminal (1) ou d'une gestion de réseau.

18. Commutateur selon la revendication 17, dans lequel le dispositif de commande (54) présente des moyens pour la détection et l'évaluation de signaux de commande.

19. Dispositif avec un commutateur selon la revendication 17 ou 18, un dispositif de réglage de largeur de bande (105) étant associé au commutateur (5) qui est réalisé de telle façon que, pour le réglage de la largeur de bande de la transmission de données par la voie de transmission par satellite spécifique à l'adresse cible, il envoie les paquets de données destinés à une adresse précise via la voie de transmission par satellite à une vitesse correspondant à la largeur de bande choisie par l'utilisateur ou par la gestion du réseau.
